# EUROPEAN PATENT SPECIFICATION

(11) **EP 0 671 346 B1**
(45) Date of publication and mention of the grant of the patent: **02.12.1998**
(21) Application number: 95200562.7
(22) Date of filing: 07.03.1995
(51) Int. Cl.: B65F 3/00, B60K 28/00, B60K 31/00

(54) **Refuse collection vehicle provided with a safety system**
Mi Sicherheitssystem versehenes Müllsammelfahrzeug
Véhicule de ramassage d'ordures avec système de sécurité

(30) Priority: 08.03.1994 NL 9400359; 03.11.1994 NL 9401831
(43) Date of publication of application: 13.09.1995
(73) Proprietor: GEESINK B.V., NL-8305 AG Emmeloord (NL)
(72) Inventor: Barmentloo, Adrianus, NL-8531 RG Lemmer (NL)
(74) Representative: Iemenschot, Johannes Andreas, Ir.

(56) References cited:
- EP-A- 0 569 927
- DE-A- 3 729 107
- DE-A- 3 918 971
- DE-A- 4 121 720

## Description

The invention relates to refuse collection vehicle according to the preamble of claim 1.

A refuse collection vehicle of this type is disclosed in DE-A-4121720. This know refuse collection vehicle has a safety system which requires that in order to be able to drive the vehicle with a speed above a certain limit speed or to drive the vehicle in reverse, each footboard is first brought in a position in which it cannot be used by the personnel. This is awkward and takes additional time. Moreover, it is not absolutely necessary for achieving the required safety. For the safety it is important that during driving with a speed above the limit speed or driving in reverse personnel does not stand on footboard.

The object of the invention is to provide a refuse collection vehicle which does not present the abovementioned drawback.

This object is achieved with a refuse collection vehicle according to claim 1.

The safety system of this refuse collection provides the required safety when necessary. Moreover, the safety system provides additional safety, i.e. the loading device and/or container lift are put out of action if a load on the footboard exceeds a threshold value and if no change in the state of the footboard is detected during a preset period of time (for example, due to malfunctioning of parts of the system).

DE-A-3918971 and DE-A-3729107 disclose refuse collection vehicles with a speed limiting system and a reversing safety system respectively. These systems come into operation when someone is standing on a footboard. However, these systems are only partial safety systems.

Preferred embodiments of the refuse collection vehicle according to the invention are laid down in the sub-claims and described in the following description.

The invention will now be explained with reference to the drawing, in which:
Fig. 1 is a side view of a refuse collection vehicle according to the invention, with safety screens in the working position;
Fig. 2 is a side view on an enlarged scale of the rear part of the loading device of the refuse collection vehicle of Fig. 1, with one safety screen in the working position;
Fig. 3 is a rear view on an enlarged scale of the refuse collection vehicle of Fig. 1, with a safety screen in the working position on the left and a safety screen in the rest position on the right;
Fig. 4 shows in detail a detection unit disposed between the loading device and a safety screen;
Fig. 5 is a top view of the indicating unit of
Fig. 6 shows a simplified diagram of the control of the safety system of the refuse collection vehicle according to the invention;
Fig. 7 is a side view of a footboard with safety device of a slightly different embodiment of the refuse collection vehicle according to the invention;
Figs. 8a and 8b show in rear view the two positions of the footboard of Fig. 7;
Fig. 9 shows in side view another embodiment of a footboard with safety device;
Fig. 10 shows a simplified diagram of the control of another embodiment of the safety system with a movable footboard;
Fig. 11 shows in detail a detection unit of another type fitted between the loading device and a safety screen;
Fig. 12 shows a diagram similar for that of Fig. 6 for a refuse collection vehicle with a detection unit of Fig. 11.

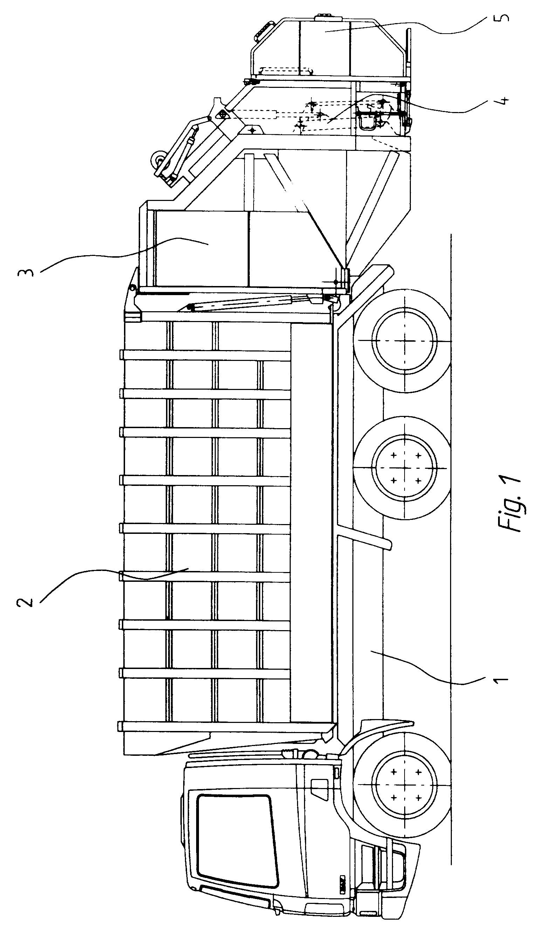

Fig. 1 shows a refuse collection vehicle according to the invention, comprising a chassis 1 which is provided with a body 2 and a loading device 3. Fixed at the rear side of the loading device is a container lift 4, by means of which refuse containers can be emptied into the loading device 3. Safety screens 5 are fixed to the loading device 3 at the rear left and right sides.

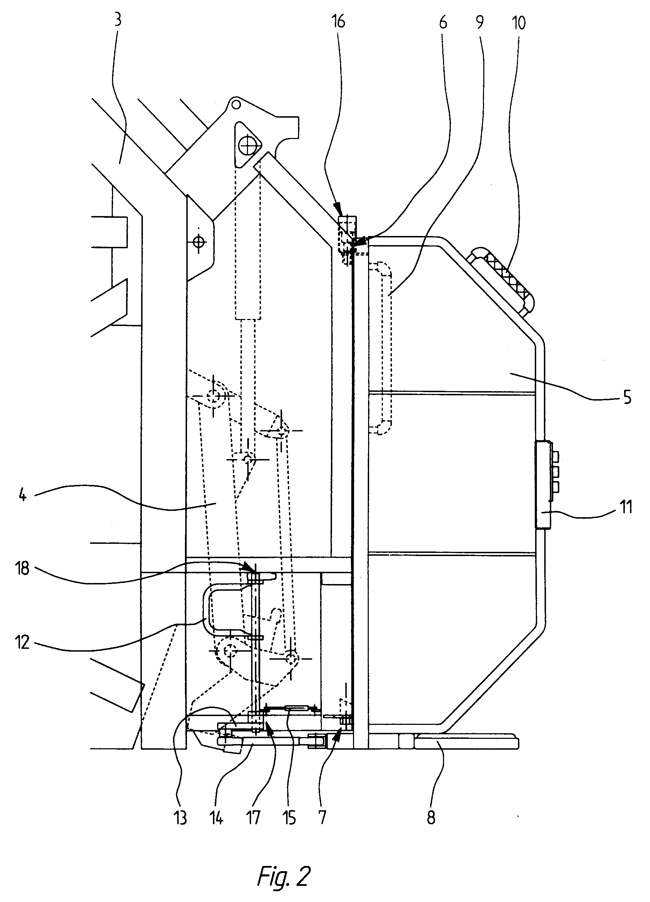

It can be seen in Fig. 2 that a safety screen 5 is fixed so that it pivots about a vertical axis in pivot points 6 and 7, with the result that the safety screen can be swung in and out. In the swung-in position (rest position) the total length of the vehicle is shorter, and there is less of a risk of damage to the safety screen. In that case the container lift 4 is also put out of action. This means that an operator is forced first to take the safety measures before work can start, and no damage to the safety screens due to an operating error can occur either. The container lift 4 is completely screened off laterally by the safety screen. The container lift 4 can still be seen, since the safety screen 5 is partially made of transparent material. transparent material.

A footboard 8 is fixed to the lower side of the safety screen 5. Handles 9 and 10, which are likewise fixed to the safety screen 5, can also be seen.

A control panel 11 is fixed to the safety screen 5 at such a place that operation thereof is possible only at a safe distance from the container lift 4.

The safety screen 5 is swung in and out by means of a handle 12. The handle is fixed so that it can pivot about a vertical axis in points 17 and 18. The handle is situated in such a place that soiling through refuse from refuse containers is impossible and soiling through dirt etc. splashing up from the road surface is virtually impossible. The handle 12 acts upon the safety screen by way of a lever 13 and pull rod 14. The safety screen is locked by pressing the lever mechanism 13, 14 through a dead centre position. The mechanism is then held in this position through the action of a gas spring 15 on the handle 12.

Disposed at the position of the top pivot point 6 of the safety screen 5 is a detection unit 16, which will be described in greater detail below. Said unit detects the position of a safety screen 5. The detection unit is placed so high up that the risk of being soiled through refuse from emptied containers is minimal. This also ensures that if the footboard is damaged, the relatively expensive detection unit is not also damaged. The detection is preferably achieved by means of contactless proximity switches which are fitted in a sealed housing of the detection unit. A reliable and fault-free detection system is obtained in this way.

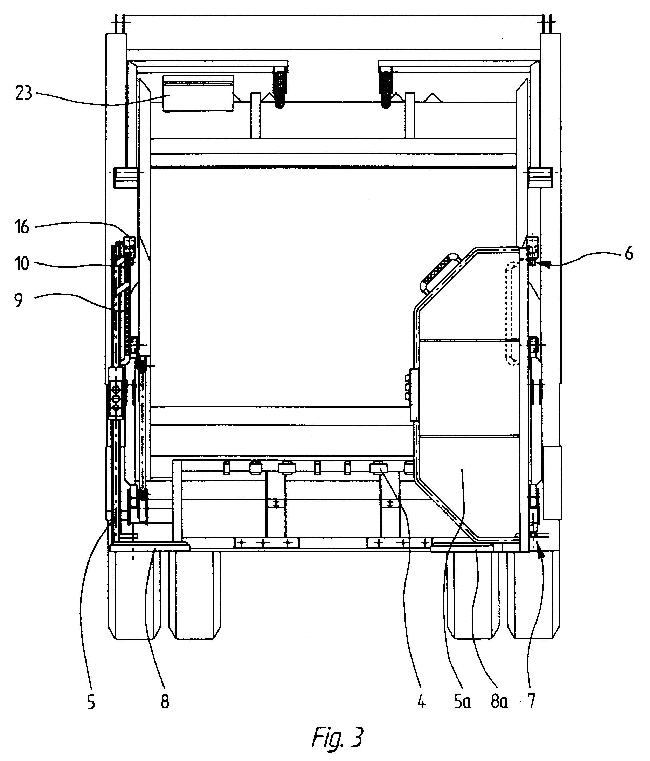

It can be seen in Fig. 3 that the right-hand safety screen 5a is swung in, so that it is in the rest position in front of the container lift 4. The left-hand safety screen 5 is swung out, into the working position. The safety screen 5 is then in a position outside the movement mechanism of the container lift 4.

In the working position of the safety screen the footboard 8 provides space for an operator, who can stand only on the inside of the safety screen 5. The safety screen prevents the operator from leaning outside the contour of the vehicle. A handle 9 is provided on the inside of the safety screen 5. A second handle 10 is fixed on the edge of the safety screen 5 and faces inwards. The hands which grip the handles consequently cannot project beyond the contour of the vehicle either. The position behind the safety screen also affords reasonably comfortable protection from wind and rain.

A switch box 23 is placed on the roof of the loading device, which switch box contains an electrical control unit, for example a PLC (Programmable Logic Controller), which provides the electrical control of the refuse collection vehicle.

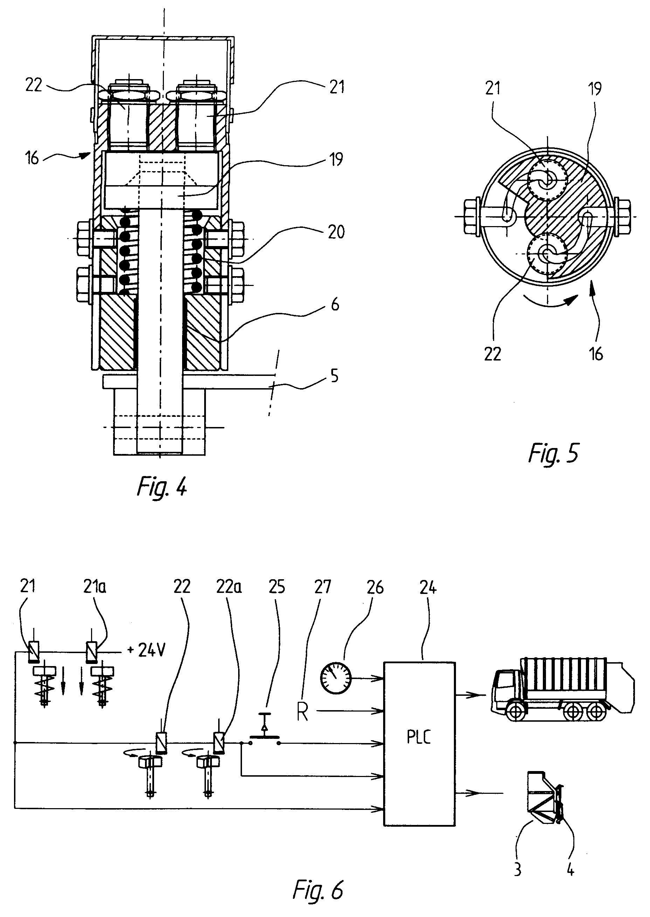

Fig. 4 shows in detail the detection unit 16 which is placed at the pivot point 6. The safety screen 5 is fixed to a detection element 19. Said detection element 19 is supported by a compression spring 20. If a person steps onto the footboard, the safety screen 5, and thus also the detection element 19, will move downwards. This is possible because the pivot points 6 and 7 allow the safety screen 5 to make not only a rotary movement, but also a sliding movement in the axial direction. This changes the control state of a proximity switch 21 disposed above the detection element 19. The switch 21 is connected to the electrical control unit of the refuse collection vehicle.

Fig. 5 shows a top view of the detection unit 16. The top side of the detection element 19 consists of an essentially round disc from which a segment has been removed. Consequently, swinging in or out the safety screen 5, which is fixed to the detection element 19, changes the control state of a proximity switch 22, which is also disposed above the detection element 19, and which is also connected to the electrical control unit of the refuse collection vehicle.

Using the relatively small proximity switches 21, 22, in conjunction with the shape of the detection element 19, which devices are accommodated in a closed housing, means that a compact, sturdy, completely sealed detection unit can be obtained. Damage and simple sabotage are consequently out of the question, and dirt and dust have no effect on the operation of the detection unit. Its limited dimensions mean that the detection unit can also be used quite easily in other places and for other purposes, so that it can be considered as a universal instrument.

Fig. 6 shows diagrammatically the principle of the control of the safety system. The proximity switches 21 and 21a for the left-hand and right-hand safety screens 5 and 5a are connected in series to the input of a PLC 24 accommodated in the switch box 23. If a person is standing on the left-hand and/or the right-hand footboard, this is detected by the PLC 24.

The proximity switches 22 and 22a for the left-hand and the right-hand safety screens 5 and 5a, placed in series with the two proximity switches 21 and 21a, are connected in series to an input of the PLC 24. If a safety screen is not in the working position, this is detected by the PLC 24.

In the two cases described above both the container lift 4 and the loading device 3 can be put out of action by the PLC 24. The power supply to the control elements of the loading device 3 and the container lift 4, said control elements being symbolized in the diagram by a switch 25, is also interrupted, which means that control functions which operate without interaction of the PLC are no longer possible either.

An input of the PLC 24 is also connected to the speedometer 26 of the vehicle, with the result that a speed above, for example, 20 kph can be detected. If it is also detected that a person is standing on the footboard 8, the PLC can limit the speed of the vehicle. It is also possible for the PLC to give an external unit a command to limit the speed.

The speed can be regulated in several ways. Vehicles are known in which the fuel injection pump is already provided with a standard electronic control unit. This unit can be controlled externally for simple regulation of the speed by regulating the degree of fuel injection to the vehicle engine.

The speed can also be regulated by making a preferably pneumatic cylinder act upon the lever of the fuel injection pump. The cylinder must be provided with a position detector, so that any desired position of the cylinder with a corresponding degree of fuel injection can be set and regulated, preferably by the PLC.

In addition, electrical drives are known, which drives can act upon the lever of the fuel injection pump, as a result of which the PLC can regulate the fuel injection directly by way of analogue signals.

An advantage of the regulation systems described above is that a speed of 20 kph simply cannot be exceeded, not even by selecting a higher gear, while that speed can be exceeded when only the rotational speed of the vehicle engine is limited. Another advantage is that the above measures can also be used for regulating an increased rotational speed of the vehicle engine if the refuse collection unit of the refuse collection vehicle is operational, and for limiting the statutory maximum speed of, for example, 80 kph. Several desirable or statutory functions can thus be carried out with one unit.

Finally, an input of the PLC 24 is connected to a reversing detector 27. This can be achieved relatively simply by connecting said input to the reversing light, or by a connection to a detector at the gearbox of the vehicle. If reversing is detected and it is also detected that a person is standing on the footboard 8, the PLC will switch off the engine of the vehicle.

The operation of the proximity switches is monitored by the PLC 24. If no change in state is established in the PLC inputs within a certain period, for example 30 minutes, the container lift 4 and the loading device 3 are put out of action. This discourages tampering with and sabotage of the safety system, and unsafe situations as the result of sabotage are prevented. The above mechanisms are switched on again if a change in state is detected again, for example if someone steps onto the footboard.

The control is also designed in such a way that breakage of a proximity switch cannot lead to dangerous situations. This is important in particular in the case of proximity switches, i.e. electronic contact switches, because if this type of switch breaks one cannot tell after the break whether contact is being made or has been broken. If the switch detecting whether someone is standing on the footboard is faulty, and if contact is still being made, despite the fact that someone is standing on the footboard, the loading device 3 and the container lift 4 will be put out of action as described above after, for example, 30 minutes. If the switch is permanently broken, the speed regulator will go into operation and the loading device 3 and the container lift 4 will be put out of action.

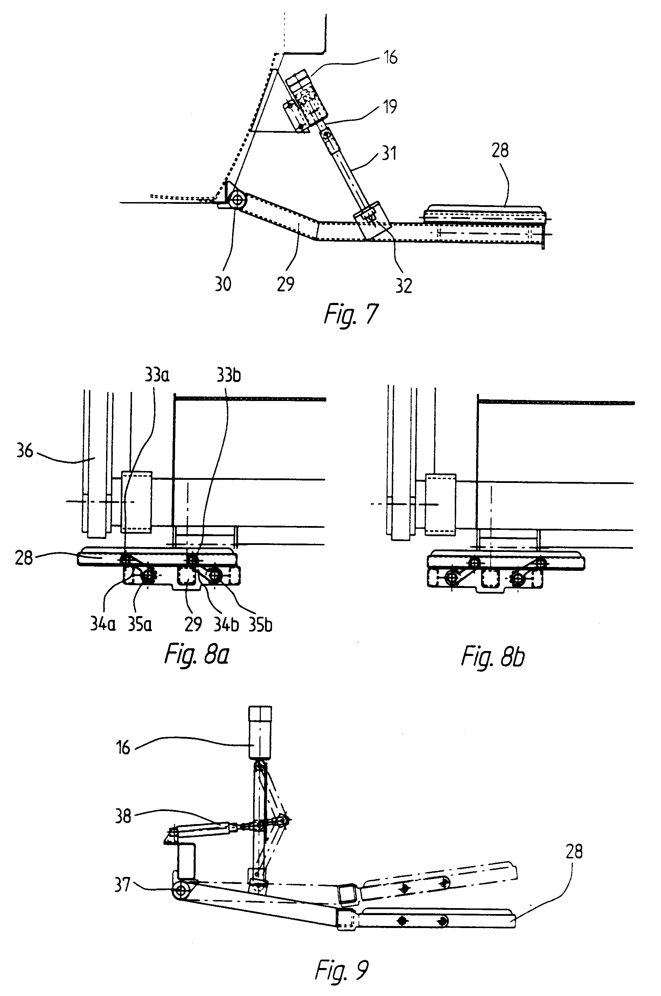

It is possible that in the case of certain embodiments of refuse collection vehicle screens such as the safety screens 5 and 5a described above will not be necessary, but a footboard is still desirable. The detection that someone is standing on the footboard, with the measures resulting therefrom, can be achieved in a different way, for example in the manner indicated in Fig. 7.

In the embodiment of Fig. 7 a footboard 28 is fixed by means of a transverse tilting mechanism to a footboard arm 29. The footboard arm 29 is fixed by its end to the rear side of the refuse collection vehicle in point 30 in such a way that it pivots about a horizontal axis. By means of a pull rod 31 which acts upon the footboard arm in point 32, the arm is also connected to a detection element 19 of a detection unit 16. The detection unit 16 is also fixed to the refuse collection vehicle. If someone steps onto the footboard 28, the footboard, and thus also the detection element, will move downwards, with the result that the control state of a proximity switch 21 situated in the detection unit will change. A detection unit of the type shown in Fig. 4 can be used as the detection unit 16, since it has limited dimensions. The upward and downward swing of the footboard is limited by the design of the detection unit and is cushioned by the compression spring 20 present in the detection unit.

The footboard of Fig. 7 is shown in rear view in Figs. 8a and 8b. The way in which the transverse tilting mechanism operates can be seen here. The footboard 28 is fixed to tilting arms 34a and 34b in such a way that it pivots about horizontal axes at the position of points 33a and 33b. These two tilting arms are in turn fixed to the footboard arm 29 in such a way that they pivot about horizontal axes at the position of points 35a and 35b. By means of this parallelogram construction, the footboard 28 can assume two positions in the transverse direction of the vehicle. If the footboard were in a fixed position, the footboard would have to be considerably narrower, in order to ensure that, on the one hand, it does not come into contact with a lifting arm 36 of a loading device and, on the other hand, does not come into contact with wide refuse containers being handled. By means of the transverse tilting mechanism it is possible to achieve a footboard with the statutory dimensions within the limited remaining space. By detecting the position of the footboard by means of a proximity switch the footboard and the lifting arm of the loading device can be protected from damage as the result of operating errors. It also means that the footboard can act as a selection switch if two different loading devices are present on the refuse collection vehicle.

A slightly different embodiment of a footboard with safety system is shown in Fig. 9. As in the embodiment of Fig. 7, the above-described detection unit 16 detects whether someone is standing on the footboard 28, which can pivot about a horizontal axis at the position of point 37. If this is not the case, the vehicle is released for travel faster than 20 kph or for reversing. In these cases an air cylinder 38 will also slide out and cause the footboard to swing up. The indicating unit 16 remains in operation even when the footboard is swung up. If the vehicle comes to a standstill again, the footboard will swing down automatically and be available for operatives again.

The advantage of the footboard swinging up is that people are discouraged from still jumping onto the footboard in dangerous situations. In addition, the footboard is automatically protected from damage. Swinging the footboard up a short distance is already sufficient to make the safety system work and to protect the footboard. Swinging the footboard up only a short distance prevents operators from being injured by the footboard when it is being raised or lowered. This contrasts with devices where a footboard is swung away under the vehicle, in which case the footboard can strike the feet and legs of operatives while it is being swung away. An additional advantage is that the movement of the footboard is achieved with an air cylinder with the result that a cushioning effect is obtained and great forces never act upon the footboard.

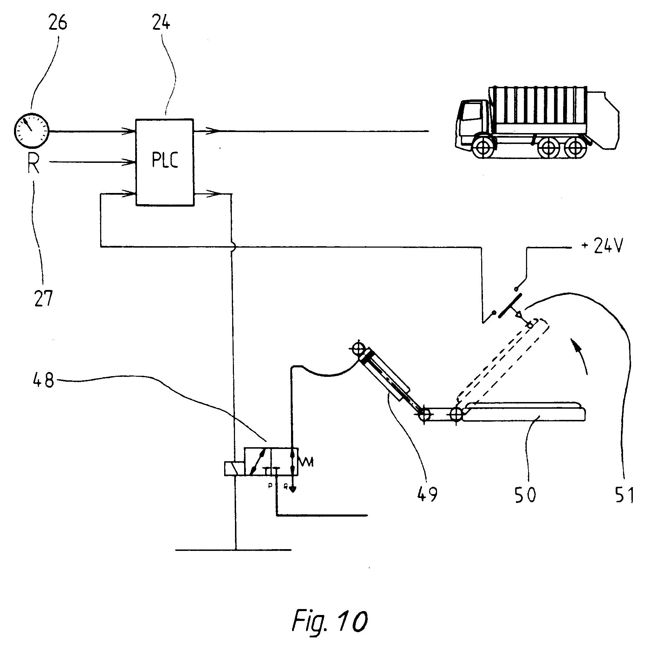

The detection of whether a person is standing on the footboard can also be achieved in another way, as indicated in Fig. 10, in which the principle of the control of another embodiment of the safety system is indicated diagrammatically.

Connected to the PLC 24 are, inter alia, the speedometer 26 and the reversing indicator 27, as described above. If the speed of the vehicle exceeds, for example, 20 kph or if reverse gear is selected, this is detected by the PLC 24. The PLC will then activate a pneumatic valve 48, with the result that a pneumatic cylinder 49 will try to swing up the footboard 50. If a person is standing on the footboard 50, it is not possible with the limited power of the cylinder to swing up the footboard 50. In its swung-up position the footboard 50 operates a contact switch 51, and this is detected by the PLC 24. Only if the PLC 24 detects this safe situation is it possible to exceed the speed of 20 kph with the vehicle, or to reverse. If the vehicle comes to a standstill again, the footboard will automatically swing down and be available again for the operators.

An additional advantage is that through being swung up the footboard 50 is automatically protected from damage as the result of reversing.

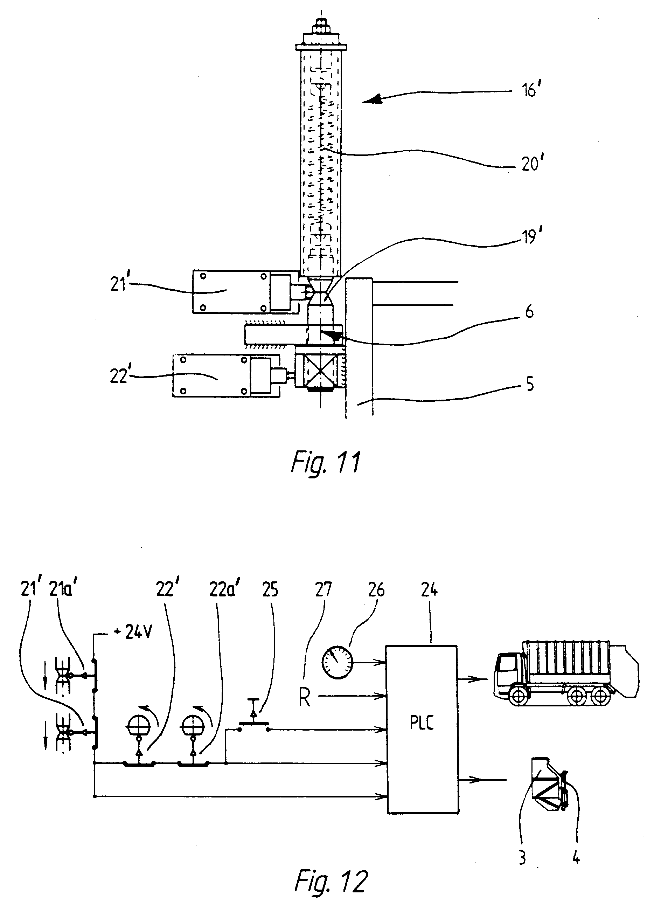

Fig. 11 shows in detail a detection unit 16' of another type which can be placed at the pivot point 6. The safety screen 5 is fixed to a detection element 19'. Said detection element 19 is suspended from a torsion spring 20', which is situated in the housing of the detection unit 16', so that dirt has no effect on the spring action. If a person steps onto the footboard, the safety screen 5 will move downwards. This is possible because the pivot points 6 and 7 allow the safety screen 5 to make not only a rotary movement, but also a sliding movement in the axial direction of the safety screen 5. The shape of the detection element 19' is such that a contact switch 21' can be operated. The contact switch 21' is connected to the electrical control unit of the refuse collection vehicle. The bottom part of the detection element 19' is partially rounded, while part of the periphery is flattened off. As a result of this, swinging the safety screen 5 in or out actuates the contact switch 22', which is also connected to the electrical control system.

Fig. 12 shows diagrammatically the principle of the control of the safety system with a detection unit 16' of Fig. 11. The contact switches 21' and 21a' for the left-hand and right-hand safety screen 5 and 5a are connected in series to an input of the PLC 24. If a person is standing on the left-hand and/or the right-hand footboard, this is detected by the PLC 24.

Contact switches 22' and 22a' for the left-hand and the right-hand safety screen 5 and 5a, placed in series, are connected in series with the two contact switches 21' and 21a' to an input of the PLC 24. If a safety screen is not in the working position, this is detected by the PLC 24.

The above-described refuse collection vehicle with safety system according to the invention offers protection against all unsafe situations occurring in practice, for:
- the vehicle gives operators the opportunity to travel on the vehicle on a footboard of statutory dimensions fixed to a safety screen with handles;
- the safety screens protect persons travelling on the footboards in such a way that those persons cannot lean outside the contour of the vehicle, and said screens afford reasonably comfortable protection from slipstream and rain;
- the safety system prevents the forward speed of the vehicle from exceeding a predetermined speed, for example 20 kph, if a person is standing on a footboard, while the speed is regulated in such a way that the relevant maximum speed simply cannot be exceeded;
- the speed limitation can be combined with other speed limitations (for example, maximum speed during normal travel);
- the safety system prevents reversing with the vehicle if a person is standing on a footboard, by switching off the vehicle engine;
- the safety system switches off the loading device and the container lift if a person is standing on a footboard;
- the safety system releases the container lift for operation only if the safety screens are in the working position;
- the safety screens are swung in and out by means of a lever mechanism situated at a place which is readily accessible for operators, and where there is little chance of soiling;
- the safety screens in their working position ensure that the movement mechanism of the container lift is fully screened off and cannot be approached from the side;
- the safety screens are partly made of transparent material, so that the view of the loading device and the container lift is not obstructed by the screen;
- monitoring of correct functioning of proximity switches, necessary for detecting the position of a safety screen with footboard, takes place by means of a PLC, said PLC putting the loading device out of action if within a preset time no change in state in the inputs of the PLC to which the proximity switches are connected is detected;
- the control is such that breakage of switches is detected and this means that no dangerous situations can arise;
- the proximity switches are situated in the housing of the detection unit at such a point that soiling thereof will not occur and a reliable and fault-free detection is obtained;
- the use of proximity switches and detection element means that the detection unit is compact, sturdy and completely sealed, and can be used as a universal instrument in several places and in several applications;
- the control panels are situated in such a position that operation is possible only at a safe distance from the container lift and the loading device;
- the transverse tilting mechanism means that a footboard with the statutory dimensions can be used;
- swinging up the footboard(s) means that in dangerous situations personnel can no longer step onto the footboard(s) and the footboard(s) is (are) protected from damage.

## Claims

1. Refuse collection vehicle comprising a chassis having a body mounted thereon, a loading device fixed to the body, and a container lift which is fixed to the rear side of the loading device and by means of which refuse containers can be emptied into the loading device, the vehicle being provided with at least one footboard which is fixed to the loading device and which is coupled to a safety system, in such a way that in a predetermined state of the footboard both a system for directly limiting the speed of the vehicle and a reversing safety mechanism go into operation, **characterized in that** the safety system is designed in such a way that when a load on the footboard (8, 28, 50) exceeds the threshold value, both the system for directly limiting the speed of the vehicle and the reversing safety mechanism go into operation and the loading device (3) and/or the container left (4) are put out of action and if no change in state in the footboard (8, 28) is detected during a preset period of time, the loading device (3) and/or the container lift (4) are put out of action.

2. Refuse collection vehicle according to claim 1, **characterized in that** the footboard (8) is fixed to a safety screen (5) which is fixed at the side edge to the rear side of the loading device (3) and during operation of the vehicle extends backwards in the lengthwise direction of the vehicle, the footboard (8) being fixed to the side of the safety screen (5) facing the central longitudinal plane of the vehicle during operation.

3. Refuse collection vehicle according to claim 2, **characterized in that** the footboard (8) is immovably fixed to the safety screen (5), and a detection unit (16; 16') coupling the footboard (8) to the safety system is fitted between the safety screen (5) and the loading device (3) the detection unit (16; 16') comprises a detection element (19; 19') coupled to the safety screen (5) and a first switch (21; 21a; 21'; 21a') interacting therewith and connected to the safety system, for detecting the load state of the footboard.

4. Refuse collection vehicle according to claim 3, **characterized in that** the safety screen (5) is fixed to the loading device in such a way that it can swing between a working position assumed during operation and a rest position in which the safety screen faces the central longitudinal plane of the vehicle at right angles to the lengthwise direction thereof, and in that the detection unit (16; 16') comprises a second switch (22; 22a; 22'; 22a') interacting with the detection element (19; 19') and connected to the safety system, for detecting the position of the safety screen (5) in the direction of swing.

5. Refuse collection vehicle according to claim 4, **characterized in that** the safety screen is connected to the loading device (3) in a top pivot point (6) and a bottom pivot point (7), and the detection unit (16; 16') is fitted at the position of the top pivot point.

6. Refuse collection vehicle according to claim 4 or 8, **characterized in that** the detection element (19; 19') fixed to the safety screen is partially in the form of a pivot pin which is movable in the axial direction relative to the loading device (3) and is coupled to a spring (20; 20') operating in the axial direction of the pivot pin.

7. Refuse collection vehicle according to one of claims 4-6, **characterized in that** at the position of the second switch (22; 22a; 22'; 22a') the detection element (19; 19') is such a shape that said second switch can detect the position of the safety screen (5) in the direction of swing.

8. Refuse collection vehicle according to claim 1, **characterized in that** the footboard (28; 50) is connected to opeating means (38; 49) controlled by the safety system, for swinging the footboard (28; 50) up and down, and in that a detection means is present for detecting the position of the footboard (28; 50).

9. Refuse collection vehicle according to one of claims 2-8, **characterized in that** the safety system comprises an electrical control unit (24), preferably a programmable logic controller (PLC), the first switch (21; 21a; 21'; 21a') and the second switch (22; 22a; 22', 22a') being connected to at least one input of the control unit (24).

10. Refuse collection vehicle according to claim 9, **characterized in that** the speedometer (26) of the vehicle and a reversing detector (27) are also each connected to a separate input of the control unit (24).

## Patentansprüche

1. Müllsammelfahrzeug, das ein Fahrgestell, auf dem ein Wagenkasten angebracht ist, eine an dem Wagenkasten angebrachte Ladeeinrichtung und einen Behälterlift umfaßt, der an der Rückseite der Ladeeinrichtung angebracht ist und mittels dessen Abfallbehälter in die Ladeeinrichtung entleert werden können, wobei das Fahrzeug mit wenigstens einem Trittbrett versehen ist, das an der Ladeeinrichtung angebracht ist und das derart an ein Sicherheitssystem gekoppelt ist, daß bei einem vorbestimmten Zustand des Trittbretts sowohl ein System zum unmittelbaren Begrenzen der Geschwindigkeit des Fahrzeugs als auch ein Sicherheits-Umkehrmechanismus in Betrieb gehen, **dadurch gekennzeichnet**, daß das Sicherheitssystem derart gestaltet ist, daß wenn eine Last auf dem Trittbrett (8, 28, 50) den Schwellenwert übersteigt, sowohl das System zum unmittelbaren Begrenzen der Geschwindigkeit des Fahrzeugs als auch der Sicherheits-Umkehrmechanismus in Betrieb gehen und die Ladeeinrichtung (3) und/oder der Behälterlift (4) außer Betrieb gesetzt werden, und wenn während einer voreingestellten Zeitdauer keine Änderung des Zustands des Trittbretts (8, 28) erfaßt wird, die Ladeeinrichtung (3) und/oder der Behälterlift (4) außer Betrieb gesetzt werden.

2. Müllsammelfahrzeug nach Anspruch 1, **dadurch gekennzeichnet**, daß das Trittbrett (8) an einer Schutzwand (5) angebracht ist, die an der Seitenkante der hinteren Seite der Ladeeinrichtung (3) angebracht ist und sich während des Betriebs des Fahrzeugs in Längsrichtung des Fährzeugs nach hinten erstreckt, wobei das Trittbrett (8) an der Seite der Schutzwand (5) angebracht ist, die während des Betriebs zur mittleren Längsebene des Fahrzeugs zeigt.

3. Müllsammelfahrzeug nach Anspruch 2, **dadurch gekennzeichnet**, daß das Trittbrett (8) an der Schutzwand (5) unbeweglich angebracht ist und eine Erfassungseinheit (16; 16'), die das Trittbrett (8) mit dem Sicherheitssystem koppelt, zwischen der Schutzwand (5) und der Ladeeinrichtung (3) eingebaut ist, die Erfassungseinheit (16; 16') ein Erfassungselement (19; 19'), das mit der Schutzwand (5) gekoppelt ist, und einen ersten Schalter (21; 21a; 21'; 21a') umfaßt, der damit zusammenarbeitet und mit dem Sicherheitssystem verbunden ist, um den Lastzustand des Trittbretts zu erfassen.

4. Müllsammelfahrzeug nach Anspruch 3, **dadurch gekennzeichnet**, daß die Schutzwand (5) an der Ladeeinrichtung derart angebracht ist, daß sie zwischen einer Arbeitsposition, die während des Betriebs angenommen wird, und einer Ruheposition schwenken kann, in der die Schutzwand zur mittleren Längsebene des Fahrzeugs jeweils mit rechten Winkeln zu deren Längsrichtung zeigt, und daß die Erfassungseinheit (16; 16') einen zweiten Schalter (22; 22a; 22'; 22a') umfaßt, der mit dem Erfassungselement (19; 19') zusammenarbeitet und mit dem Sicherheitssystem verbunden ist, um die Position der Schutzwand (5) in Schwenkrichtung zu erfassen.

5. Müllsammelfahrzeug nach Anspruch 4, **dadurch gekennzeichnet**, daß die Schutzwand in einem oberen Drehpunkt (6) und einem unteren Drehpunkt (7) mit der Ladeeinrichtung (3) verbunden ist und die Erfassungseinheit (16; 16') an der Position des oberen Drehpunkts angebracht ist.

6. Müllsammelfahrzeug nach Anspruch 4 oder 8, **dadurch gekennzeichnet**, daß das an der Schutzwand angebrachte Erfassungselement (19; 19') teilweise die Form eines Drehbolzens hat, der in axialer Richtung relativ zur Ladeeinrichtung (3) beweglich und an eine Feder (20; 20') gekoppelt ist, die in axialer Richtung des Drehbolzens wirkt.

7. Müllsammelfahrzeug nach einem der Ansprüche 4 bis 6, **dadurch gekennzeichnet**, daß an der Position des zweiten Schalters (22; 22a; 22'; 22a') das Erfassungselement (19; 19') eine solche Gestalt hat, daß der zweite Schalter die Position der Schutzwand (5) in Schwenkrichtung erfassen kann.

8. Müllsammelfahrzeug nach Anspruch 1, **dadurch gekennzeichnet**, daß das Trittbrett (28; 50) mit vom Sicherheitssystem gesteuerten Betätigungsmitteln (38; 49) verbunden ist, um das Trittbrett (28; 50) nach oben und unten zu schwenken, und daß eine Erfassungseinrichtung zum Erfassen der Position des Trittbretts (28; 50) vorhanden ist.

9. Müllsammelfahrzeug nach einem der Ansprüche 2 bis 8, **dadurch gekennzeichnet**, daß das Sicherheitssystem eine elektrische Steuereinheit (24), vorzugsweise eine speicherprogrammierte Steuerung (PLC), umfaßt, wobei der erste Schalter (21; 21a; 21'; 21a') und der zweite Schalter (22; 22a; 22'; 22a') mit wenigstens einem Eingang der Steuereinheit (24) verbunden sind.

10. Müllsammelfahrzeug nach Anspruch 9, **dadurch gekennzeichnet**, daß der Geschwindigkeitsmesser (26) des Fahrzeugs und ein Umkehrbewegungsfühler (27) auch jeweils mit einem separaten Eingang der Steuereinheit (24) verbunden sind.

## Revendications

1. Véhicule de collecte d'ordures comprenant un châssis comportant une caisse montée sur celui-ci, un dispositif de chargement fixé à la caisse, et un lève-conteneurs qui est fixé au côté arrière du dispositif de chargement, et au moyen duquel des conteneurs à ordures peuvent être vidés dans le dispositif de chargement, le véhicule étant muni d'au moins un marchepied qui est fixé au dispositif de chargement et qui est couplé à un système de sécurité, de telle sorte que, dans un état prédéterminé du marchepied, un système pour limiter directement la vitesse du véhicule ainsi qu'un système de sécurité d'inversion se mettent en marche, caractérisé en ce que le système de sécurité est conçu de telle sorte que, lorsqu'une charge sur le marchepied (8, 28, 50) dépasse la valeur de seuil, aussi bien le système pour limiter directement la vitesse du véhicule que le mécanisme de sécurité d'inversion se mettent en marche, et le dispositif de chargement (3) et/ou le lève-conteneurs (4) sont mis hors service, et, si aucun changement d'état du marchepied (8, 28) n'est détecté durant une période de temps prédéterminée, le dispositif de chargement (3) et/ou le lève-conteneurs (4) sont mis hors service.

2. Véhicule de collecte d'ordures selon la revendication 1, caractérisé en ce que le marchepied (8) est fixé à un écran de sécurité (5) qui est fixé sur le bord latéral du côté arrière du dispositif de chargement (3), et qui, durant le fonctionnement du véhicule, s'étend vers l'arrière dans le sens de la longueur du véhicule, le marchepied (8) étant fixé au côté de l'écran de sécurité (5) en face du plan longitudinal central du véhicule durant le fonctionnement.

3. Véhicule de collecte d'ordures selon la revendication 2, caractérisé en ce que le marchepied (8) est fixé de façon inamovible à l'écran de sécurité (5), et une unité de détection (16 ; 16') couplant le marchepied (8) au système de sécurité est disposée entre l'écran de sécurité (5) et le dispositif de chargement (3), l'unité de détection (16 ; 16') comprenant un élément de détection (19 ; 19') couplé à l'écran de sécurité (5) et un premier commutateur (21 ; 21a ; 21' ; 21a') interagissant avec celui-ci et connecté au système de sécurité, pour détecter l'état de charge du marchepied.

4. Véhicule de collecte d'ordures selon la revendication 3, caractérisé en ce que l'écran de sécurité (5) est fixé au dispositif de chargement de telle sorte qu'il puisse osciller entre une position de travail prise durant le fonctionnement et une position de repos dans laquelle l'écran de sécurité fait face au plan longitudinal central du véhicule à angle droit par rapport à la direction de la longueur de celui-ci, et en ce que l'unité de détection (16 ; 16') comprend un deuxième commutateur (22 ; 22a ; 22' ; 22a') interagissant avec l'élément de détection (19 ; 19') et connecté au système de sécurité, pour détecter la position de l'écran de sécurité (5) dans la direction d'oscillation.

5. Véhicule de collecte d'ordures selon la revendication 4, caractérisé en ce que l'écran de sécurité est connecté au dispositif de chargement (3) en un point de pivot supérieur (6) et un point de pivot inférieur (7), et en ce que l'unité de détection (16 ; 16') est disposée dans la position du point de pivot supérieur.

6. Véhicule de collecte d'ordures selon la revendication 4 ou 8, caractérisé en ce que l'élément de détection (19 ; 19') fixé à l'écran de sécurité se présente partiellement sous la forme d'une broche de pivot qui est mobile dans la direction axiale par rapport au dispositif de chargement (3) et est couplée à un ressort (20 ; 20') fonctionnant dans la direction axiale de la broche de pivot.

7. Véhicule de collecte d'ordures selon l'une des revendications 4 à 6, caractérisé en ce que, dans la position du deuxième commutateur (22 ; 22a ; 22' ; 22a'), l'élément de détection (19 ; 19') a une forme telle que ledit deuxième commutateur puisse détecter la position de l'écran de sécurité (5) dans la direction d'oscillation.

8. Véhicule de collecte d'ordures selon la revendication 1, caractérisé en ce que le marchepied (28 ; 50) est connecté à des moyens d'actionnement (38 ; 49) commandés par le système de sécurité, pour faire osciller le marchepied (28 ; 50) vers le haut et vers le bas, et en ce que des moyens de détection sont présents pour détecter la position du marchepied (28 ; 50).

9. Véhicule de collecte d'ordures selon l'une des revendications 2 à 8, caractérisé en ce que le système de sécurité comprend une unité de commande électrique (24), qui est de préférence un dispositif de commande logique programmable (CLP), le premier commutateur (21 ; 21a ; 21' ; 21a') et le deuxième commutateur (22 ; 22a ; 22' ; 22a') étant connectés à au moins une entrée de l'unité de commande (24).

10. Véhicule de collecte d'ordures selon la revendication 9, caractérisé en ce que le compteur de vitesse (26) du véhicule et un détecteur d'inversion (27) sont également chacun connectés à une entrée séparée de l'unité de commande (24).
